(19) Europäisches Patentamt
European Patent Office
Office européen des brevets

(11) **EP 2 212 933 B1**

(12) **EUROPEAN PATENT SPECIFICATION**

(45) Date of publication and mention
of the grant of the patent:
**31.08.2011 Bulletin 2011/35**

(51) Int Cl.:
***H01L 41/09*** *(2006.01)*

(21) Application number: **08844721.4**

(22) Date of filing: **30.10.2008**

(86) International application number:
**PCT/GB2008/003664**

(87) International publication number:
**WO 2009/056828 (07.05.2009 Gazette 2009/19)**

(54) **TEMPERATURE COMPENSATING FLEXTENSIONAL TRANSDUCER**

TEMPERATURAUSGLEICHENDER FLEXTENSIONALER WANDLER

TRANSDUCTEUR DE FLEXION-EXTENSION COMPENSANT LA TEMPÉRATURE

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **01.11.2007 GB 0721433**

(43) Date of publication of application:
**04.08.2010 Bulletin 2010/31**

(73) Proprietor: **QinetiQ Limited
Farnborough
Hampshire GU14 0LX (GB)**

(72) Inventors:
• **RAHMAN, Ahmed, Yehia, Amin, Abdel
Farnborough
Hampshire GU14 0LX (GB)**

• **GORE, Jonathan, Geoffrey
Farnborough
Hampshire GU14 0LX (GB)**
• **LOWRIE, Fiona, Louise
Farnborough
Hampshire GU14 OAA (GB)**

(74) Representative: **Lowther, Deborah Jane et al
QinetiQ Limited
Intellectual Property
Malvern Technology Centre
St Andrews Road
Malvern
Worcestershire WR14 3PS (GB)**

(56) References cited:
**US-A- 4 808 874          US-A1- 2004 035 106
US-A1- 2006 146 096**

**Description**

This invention relates to flextensional transducers and in particular to flextensional transducers capable of operating at elevated temperatures.

Flextensional transducers are known in the prior art. A typical known flextensional transducer is a composite structure comprising a piezoelectric ceramic stack and a flexible metal housing shell, which is commonly oval or diamond shaped. Movement of a conventional flextensional transducer commonly occurs as a result of electrically activated expansion in the piezoelectric stack. The stack is mechanically coupled to the housing shell and thus acts as a driver causing the housing shell to flex to cause a displacement of the flexible shell in a different direction from the direction of driver elongation, typically a transverse or orthogonal direction. This output displacement is usually amplified relative to the input displacement of the piezoelectric stack.

Piezoelectric materials which are used in such known transducers are also well known in the prior art. Piezoelectric materials are materials that undergo a small dimensional change in response and proportional to the strength of an applied voltage, or in reverse operation, generate a voltage in response to an applied mechanical stress. These materials may recover their original shape when the voltage is removed. Known flextensional transducers include (i) mechanical actuators, which use the achieved transducer displacement to move or to apply a force to a device, and (ii) acoustic transducers or sonars, which produce or receive an oscillating or vibrating displacement respectively to generate or to receive an acoustic signal.

The most common example of piezoelectric material that is used is lead zirconate titanate $(Pb[Zr_xT_{1-x}]O_3$, where $0<x<1)$. It is often referred to as a PZT material, this being an abbreviation of its chemical formula.

US 4845688 describes a flextensional acoustic transduction device comprising a shell having orthogonally disposed shell axes and a transduction drive means in the form of a piezoelectric stack. In operation the piezoelectric stack expands during a positive cycle of an alternating voltage causing the outward movement of opposed shell ends, which causes orthogonal surfaces and connected end mounts of the transducer shell to move inwards by a magnified displacement. On the negative cycle, the process reverses and the ends mounts move outwards as the piezoelectric stack decreases in size.

Another prior art reference, US 4808874, describes an actuator design in which an amplifier mechanism for a piezoelectric motor comprises a double sagittal linkage mechanism that surrounds and is moved by an elongate piezoelectric actuator so as to provide a mechanically amplified stroke output. The output movement may be used to operate a hot gas valve. The structure includes compression screws arranged to preload the structure and to retain the actuator so that it moves with the end points of the linkage mechanism during operation. The mechanism also includes thermal compensator elements that are located between the ends of the actuator and the surrounding structure.

US 7132781 describes a piezoelectric actuator which moves first and second arms with respect to one another in response to expansion and contraction of the actuator. As a result of the magnification factor developed by the main support structure, extremely small difference of thermal coefficients of expansion between the actuator material and the main support structure can create relatively large movements of output in the main support structure over normal operating temperature ranges, so means for compensating for this effect, in the form of a temperature compensating insert element positioned along an arm portion, are provided.

A Tennessee company, dsm (Dynamic Structures and Materials), of 205 Williamson Square, Franklin, TN 37064, make a range of piezoelectric actuation mechanisms, each comprising a piezoelectric stack in the centre of a flextensional amplification frame.
The range of dsm actuators include those designed as "expansion" or "push" actuators, and those designed to be "contracting" or "pulling" actuators.

A first aspect of the present invention provides a flextensional transducer that can be stored at room temperature and activated and operated at an elevated temperature in excess of 200°C, the transducer comprising (i) an elongate driver, (ii) a flextensional housing shell containing the elongate driver, having a different coefficient of thermal expansion from that of the driver, and comprising a pair of contact portions located on opposite sides of the housing shell and in mechanical contact with the ends of the driver, and (iii) thermal compensating members; the flextensional housing shell moving by flexing on actuation, the thermal compensating members being located in, or on, parts of the housing shell that move on actuation, and comprising a material having a different coefficient of thermal expansion from that of surrounding parts of the housing shell, such that as the temperature increases up to the said elevated temperature the thermal compensating members expand more or less than the said surrounding parts of the housing shell, causing the housing shell to flex so as to urge the contact portions of the housing shell towards each other to compensate for the greater thermal expansion of the housing relative to that of the driver.

By "mechanical contact" we mean that there is sufficient contact to secure the elongate driver within the housing so as to withstand extraneous forces such as gravity or vibration acting on the transducer in operation. In general it is preferred that there are no separate retaining means, such as screws or the like, to secure the elongate driver within the housing. Where such separate retaining means such as screws are present, special care, and/or even special interface members, may be needed, in order to ensure a secure and aligned contact is achieved at the driver element/screw tip interface.

The contact portions of the housing shell may be considered to be applying a clamping force on the driver. This clamping force may be minimal or substantially zero where the driver is a mere frictional fit between the contact portions of the housing, or in preferred embodiments may be sufficient to pre-stress the driver within the housing shell so that there is an initial preload on the driver. Pre-stressing or pre-loading of the driver is particularly preferred where the driver is a piezoelectric material for substantially preventing damage to the piezoelectric material due to tensile stresses induced by the applied or induced electrical signal in operation. The desire to preload piezoelectric material in flextensional cells, and knowledge of how much preload is desirable, is known and understood by the man skilled in the art.

The flextensional housing shell of the present invention may be considered to flex in the manner of a scissor lift. Thus it advantageously provides an output displacement of opposite vertices that is amplified relative to an applied input displacement and in an orthogonal direction. For example the housing shell may comprise a first pair of sides an end of each of which is flexibly hinged to one of the housing contact portions and a second pair of sides one end of each of which is flexibly connected to the other of the contact portions. The other end of the sides may be flexibly connected to transmission portions of the housing, which are the portions that provide the output displacement when the housing is flexed. The flexibly hinged sides may provide shoulder portions between the contact and transmission portions. Preferably the flextensional housing comprises orthogonally disposed primary and secondary axes, the driver extending along the housing primary axis, and output displacement being along the secondary axis. The primary and secondary axes may be the major and minor axes respectively. Preferably the flextensional housing shell is in the form of a closed loop.

In operation, up to and at the said elevated temperature, the transducer components expand. As noted above, the coefficient of thermal expansion of the housing shell is higher than that of the elongate driver, and generally will be significantly higher. In some embodiments the coefficient of thermal expansion of the housing shell is at least 10 times as high as that of the elongate driver. Typically the elongate driver comprises a PZT material which has a thermal coefficient of expansion which is negligible. Typically the flextensional housing shell comprises a conventional metal or alloy such as stainless steel, which has a thermal coefficient of expansion of about 10 to 17 x$10^{-6}$/°C. Where the housing comprises a conventional meal or alloy and the driver a piezoelectric element, the coefficient of thermal expansion of the housing will be significantly higher that that of the driver. In the absence of the included thermal compensating members, the clamping force of the driver ends would lessen so that damage to the driver could occur, or in the worst case the driver could fall out of the housing shell. The housing shell preferably maintains a constant clamping force on the driver from room temperature to the said elevated temperature, maintaining the contact, or any initial preload on the driver.

At any temperature "t" up to and at the said elevated temperature the thermal compensating members in the or on the housing shell expand a different amount from the surrounding parts of the housing shell causing the shell to flex to move the contact portions towards each other a distance $\Delta D_t$ given by the formula:

$$\Delta D_t = \Delta d_{Ht} - \Delta d_{Dt}$$

where $\Delta d_{Ht}$ is the distance the contact portions of the housing move apart due to thermal expansion of the housing when the temperature is raised from room temperature to a temperature t, and $\Delta d_{Dt}$ is the increase in length of the driver due to thermal expansion of the driver when the temperature is raised from room temperature to a temperature t.

Preferably the thermal compensating members are located in parts of the housing shell that, on actuation of the transducer, move towards or away from the driver axis.

It is preferred that there is direct contact between the contact portions of the housing shell and the opposite ends of the driver. This advantageously provides a compact device. However, indirect contact via another member, secured either to the inside surface of the contact portion, and/or to the ends of the elongate driver, is also envisaged.

Transducers according to the invention fall into two main categories. The first category is actuators. In preferred actuator embodiments according to the invention, the elongate driver can be actuated by a signal (typically an electrical signal) so as to change its length, and the flextensional housing shell comprises transmission portions located between the said contact portions on opposite sides of the housing shell, the arrangement being such that the said change in length of the driver causes the said transmission members of the housing to move relative to each other, or to exert a force, in a direction orthogonal to the length of the elongate driver. Thus in these actuator embodiments, the flextensional housing of the transducer translates the displacement of the driver through the mechanical linkage of the flextensional housing, into a movement or force in an orthogonal direction of other parts of the housing, namely the transmission portions of the housing. Such actuators may typically be deployed in operation so that the transmission portions then transmit their displacement so as to displace or to apply a force to a device. It will be appreciated that in applications where the transmission portions are unrestricted by other members, they will transmit a displacement, but in other applications, if the transmission members are constrained, they will apply a force rather than a displacement to a device. In general the displacement and force achieved with such transducers are related; a large force is obtained at small displacement and vice versa. Thus, maximum force is achieved at zero displacement and maximum displacement is achieved at zero force. The flextensional housings of the actuator type transducers according to the invention may be designed in a known manner to provide so called "push" actuators, exerting an outward displacement or force in operation, or so called "pull" actuators exerting an inward displacement or force in operation. The flextensional housings are preferably arranged so that the initial change in length of the driver provides an amplified displacement of the transmission members of the housing.

The second category of transducers according to the invention operates in a reciprocal manner to the actuators. In this category the flextensional housing shell again comprises transmission portions located between the said contact portions on opposite sides of the housing shell, and in this case the preferred arrangement is such that relative movement of the transmission members in a direction orthogonal to the length of the driver causes a change in length of the driver and consequent generation of a signal (typically an electrical signal). Although in these applications the driver is receiving a displacement, rather than generating one, it is still referred to in this specification as a "driver" member since they are driving a signal. We will refer to this category of transducers in the present specification as "sensors" since they are acting to detect or sense a movement.

As in the prior art, the flextensional housings used in transducers according to the invention may be any general shape, for example, simple ovals, or rectilinear shapes.

The transducers according to the present invention are capable of being stored at room temperature but operated at an elevated temperature in excess of 200°C, preferably at a temperature in excess of 300°C 400°C, 500°C, 550°C or even 570°C. The transducers may also operate at lower temperatures down to 0°C, -20°C, -50°C, or even -70°C, the said mechanical contact and constant clamping force being maintained across the whole temperature range.

The driver of the transducer of the present invention preferably changes its length in response to an applied stimulus, typically an electrical stimulus, or generates a signal, typically an electrical signal, in response to a change in its own length, caused by movement of the flextensional housing shell on actuation of the transducer. To this end, it is preferred that the driver comprises one of the so-called "smart materials" now available, these being materials that can have one or more properties altered in a controlled manner by an external stimulus such as an electric or magnetic field or temperature. Examples of suitable smart materials include piezoelectric materials, which have already being described with reference to the prior art, magnetostrictive materials, electrostrictive materials, shape memory alloys, and magnetic shape memory alloys.

A magnetostrictive material is a material that changes its shape when subjected to a magnetic field, and can recover its original shape when the magnetic field is removed, or which in reverse operation generates a magnetic field in response to a change in its shape. The most commonly used magnetostrictive alloy is Terfenol-D, an alloy of terbium and iron.

An electrostrictive material is a material that changes its shape when subjected to a electric field and can recover its original shape when the electric field is removed, or which in reverse operation generates a electric field in response to a change in its shape.

The most common electrostrictive material is a lead-magnesium-niobate (PMN) ceramic material.

A shape memory alloy (SMA) is an alloy that can "remember" its shape, i.e. it can undergo an apparent plastic deformation at a lower temperature that can be recovered on heating to a higher temperature. This shape memory effect is associated with a special group of alloys that undergo a crystal structure change on changing the temperature, the higher and lower temperature phases being termed the austenite and martensite phases respectively. Shape recovery is usually brought about by deforming the alloy in its martensitic phase and then increasing the temperature above the martensite/austenite transition temperature. The shape change can often be reversed by lowering the temperature again, depending on the alloy selection. The most commonly used shape memory alloys are nickel/titanium alloys.

A magnetic shape memory alloy (MSMA) is a more recently developed SMA and is one that changes its shape in response to a significant change in the magnetic field. An example of such a MSMA material is an alloy of nickel, manganese and gallium.

The use of smart materials for the driver is advantageous for a number of reasons. The materials are actuated by an external stimulus, often remotely, making it suitable for applications where access is difficult. Also devices incorporating smart materials are usually more compact, robust, and reliable, have higher output forces and require less maintenance than more conventional technologies. When choosing between smart materials, piezoelectric materials are particularly advantageous when higher force but smaller displacements are required, and SMAs and MSMAs are particularly advantageous where relatively larger displacements are required. Also piezoelectric materials provide a displacement the size of which is dependent on the voltage applied. Therefore, these may advantageously be chosen where variable displacement in use is desired.

In preferred actuators according to the invention a direct current is applied to actuate the elongate driver to cause it to change its length. It may either lengthen or shorten. However it is also envisaged that the actuators could be used in an oscillating or vibrating mode. For example, an alternating signal may be applied to cause the elongate driver to lengthen/shorten/lengthen etc., causing vibration of the flextensional cell. Similarly when the transducers are operating in sensor mode, it is preferred according to the invention that they are operating to accept a one way movement to generate a direct signal, e.g. a direct current, but it is also envisaged that they might be used to detect a vibrational movement. In such a case they might, for example, generate an alternating current. In preferred drivers the length change achieved by application of an external stimulus is recoverable; for example the length change achieved when an electrical current is applied may be recovered when the current is removed, the driver returns to, or at least towards its original length.

In transducers according to the invention, when the flextensional housing shell comprises transmission portions located between the said contact portions on opposite sides of the housing shell, then the thermal compensating members are preferably positioned between the contact portions and the transmission portions of the housing shell. In preferred embodiments the thermal compensating members are positioned at the outward facing surface of the housing shell and preferably, in this case, are made from a material having a higher coefficient of thermal expansion than the surrounding parts of the housing. The thermal compensating members may be arranged as a separate member on the outer surface of the flextensional housing shell, or they may be fully or partially embedded in the surface of the housing shell, for example so that the surface of the thermal compensating member is coterminous with the surface of surrounding parts of the housing shell. Preferably the thermal compensating members form a layer in or on part of the housing shell. For example, they may be in the form of a substantially flat or curved plate or strip, or embedded coupon. Where the thermal compensating member is in the form of a layer, that layer preferably extends over a layer of adjacent housing material, the thermal compensating layer preferably being located at the outwardly facing surface of the housing.

Preferably the flextensional housing shell comprises a pair of transmission portions located between the said contact portions on opposite sides of the housing shell and on opposite sides of the driver, and the housing comprises shoulder portions between, and flexibly connected to the said contact portions and transmission portions. Preferably the flexible connection is provided by flexure hinges, which are regions of the housing that are in the form of flexible straps of smaller cross sectional area than adjacent regions of the housing shell. The thermal compensating members preferably form part of these shoulder portions of the housing, and are positioned at an outwardly facing surface of those shoulder portions. Where flexure hinges are provided, the other housing parts are preferably substantially rigid, all movement of the housing being accommodated by the flexing motion around the hinges. Flexure hinges are usually desirable where piezoelectric materials are being used as drivers to generate smaller displacements, with the hinges providing greater accuracy than, for example, pin hinges where there may be too much 'play' in the hinge.

In preferred transducers according to the invention, the thermal compensating members have a higher coefficient of thermal expansion than surrounding parts of the housing. Preferably the coefficient of thermal expansion of the thermal compensating members is at least 20% higher, preferably at least 30% higher or 50, or 60% higher than that of the surrounding parts of the housing. Preferably the thermal compensating members have a coefficient of thermal expansion that is higher than any other parts of the housing that are adjacent to it, and/or under or over it. More preferably the thermal compensating members have a higher coefficient of thermal expansion than any part of the housing. In a preferred layered arrangement where a layer of thermal compensating member covers a layer of housing material of significantly lower coefficient of thermal expansion, the layers function in a manner similar to a typical bimetal strip, providing bending in the region of the thermal compensating members.

As examples of materials that may be used for the thermal compensating members there may be mentioned brass, copper and aluminium. As examples of materials that may be used for the housing there may be mentioned stainless steel, and titanium, especially spring steel.

As mentioned above, it is preferred for the thermal compensating member to have a higher coefficient of thermal expansion than the surrounding housing parts and to be positioned on an outwardly facing surface of the housing. In another envisaged embodiment the thermal compensating members have a lower coefficient of thermal expansion than the surrounding housing parts and are positioned on inwardly facing surfaces of the housing, resulting in a similar flexing of the housing to urge the contact portions of the housing shell towards each other in order to compensate for the greater thermal expansion of the housing relative to that of the driver member.

In embodiments where the flextensional housing shell comprises transmission portions located between the said contact portions on opposite sides of the housing shell, and shoulder portions between, and flexibly connected to the said contact portions and transmission portions these shoulder portions are preferably substantially "u" shaped. Preferably the tips of the u-shaped shoulder portions extend inwardly of the transducer, more preferably they extend in a direction that is substantially orthogonal to the direction of the elongate driver. These u-shaped shoulder portions may be substantially flat bottomed or curved bottomed u-shaped members. We have found that these u-shaped shoulder portions are particularly effective in ensuring that an inwardly directed movement, along the length of the driver, is transferred to the contact portions of the flextensional housing shell at elevated temperatures, thereby ensuring that the housing provides the constant clamping force to maintain the mechanical contact and any initial preload between the housing shell and the elongate driver up to and at the elevated temperature. In preferred embodiments the contact portions of the housing project in a direction away from length of the driver to overlap the tips of the u-shaped shoulder portions, for flexible connection thereto.

In other embodiments in which the flextensional housing shell comprises transmission portions located between the said contact portions on opposite sides of the housing shell and the housing comprises shoulder portions between, and flexibly connected to the said contact portions and transmission portions, these shoulder portions are curved between the contact portions and transmission portions. In this case typically the contact portions may simply be provided in line with the elongate driver and not extending laterally therefrom, the shoulder portions of the housing simply curving round between the transmission portions and the contact portions of the housing and being flexibly connected to both.

A second aspect of the present invention provides a method of using a transducer according to the first aspect of the invention as an actuator, at a temperature in excess of 200°C to displace a device or to apply a force to a device.

A third aspect of the present invention provides a method of using a transducer according to the first aspect of the invention, as a sensor, at a temperature of at least 200°C, the elongate driver of the sensor generating a signal in response to a displacement of the flextensional housing of the transducer.

Embodiments of the invention will now be described, by way of example, with reference to the accompanying drawings, in which:

Figure 1 is a perspective, room temperature view showing an actuator according to the invention;

Figure 2 is a cross sectional, room temperature view of the housing of the actuator of Figure 1;

Figure 3 is a perspective, room temperature view of the actuator of Figure 1, after actuation of the PZT stack;

Figure 4 is a cross-sectional, room temperature view of the actuator of Figure 1, showing its position before and after actuation of the PZT stack;

Figure 5 is a perspective view of the actuator of Figure 1 at 400°C;

Figure 6 is a cross-sectional view of the actuator of Figure 1 showing its position both at room temperature and at 400°C;

Figure 7a is a cross-sectional view of the actuator of Figure 1 at 400°C;

Figure 7b is a comparative cross-sectional view showing an actuator similar to that of

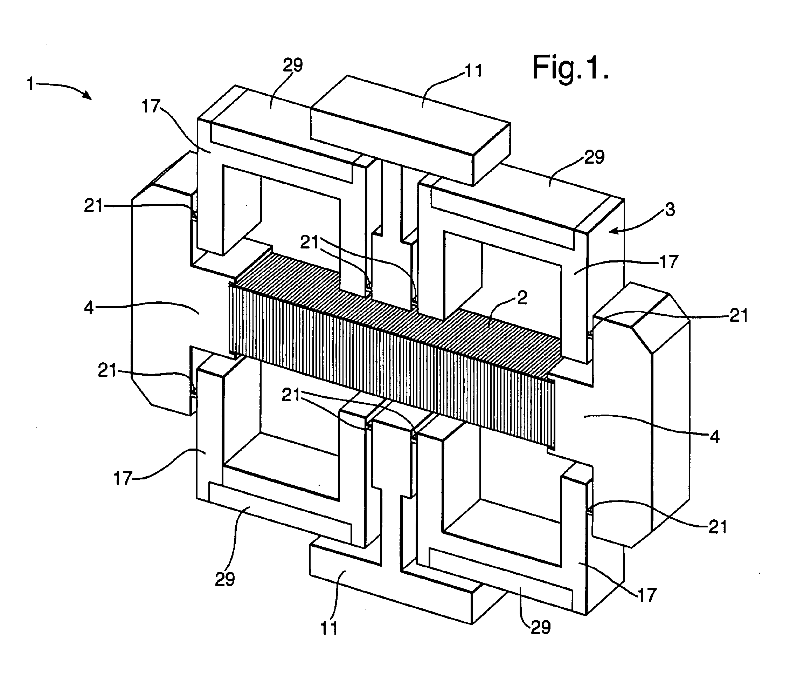

Figure 1, but without any thermal compensating members, at 400°C;

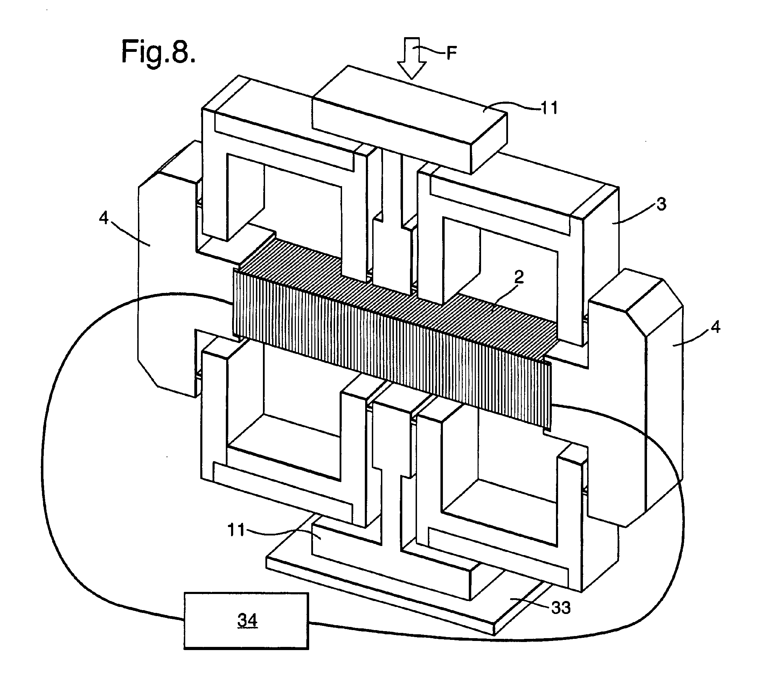

Figure 8 is a perspective view of a sensor according to the invention;

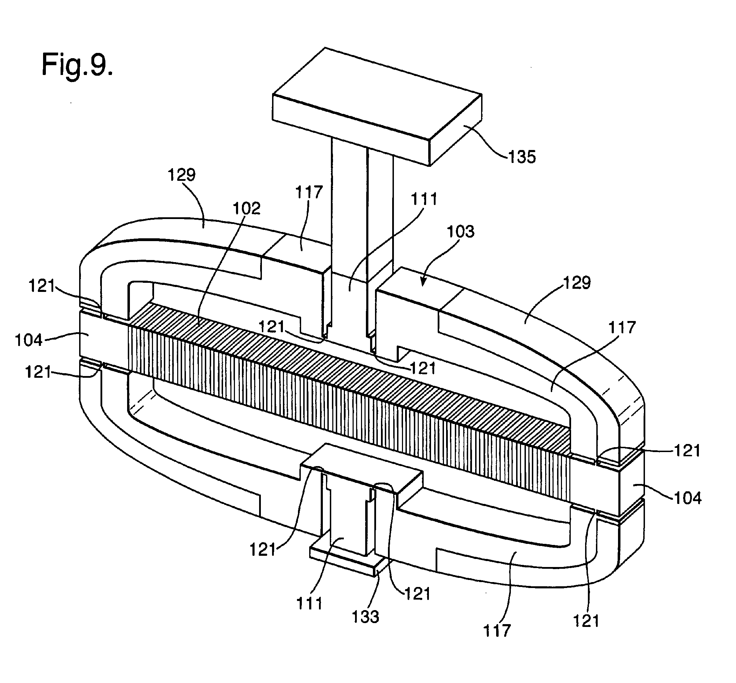

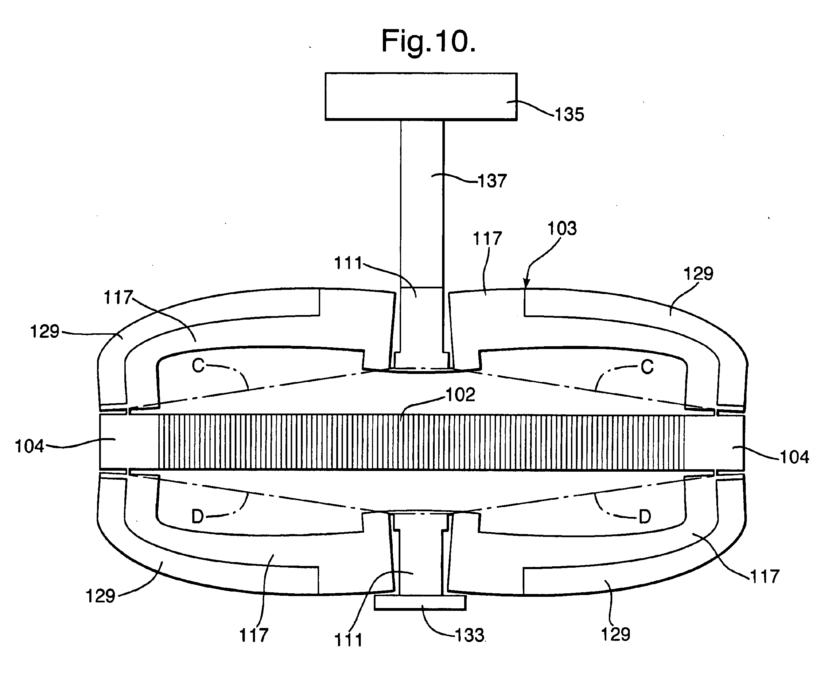

Figures 9 and 10 are perspective and cross-sectional views respectively of a second embodiment of actuator according to the invention;

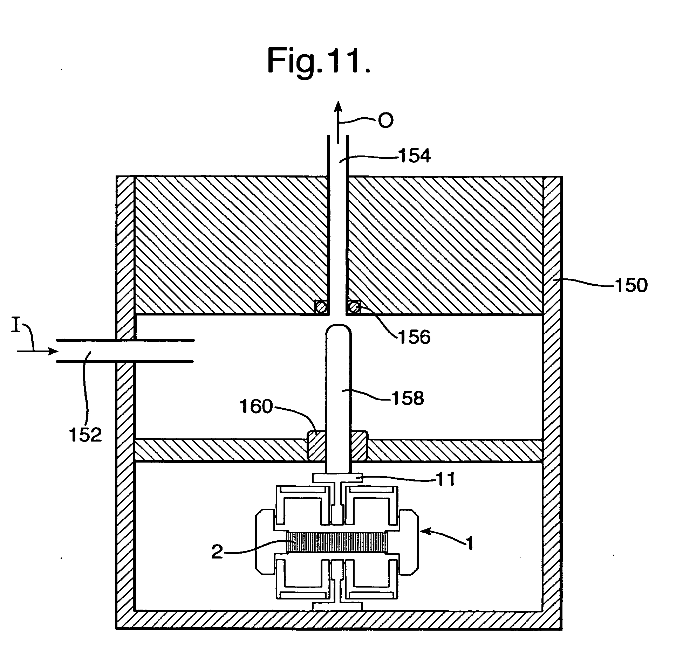

Figure 11 is a cross-sectional view showing the transducer of Figure 1 operating a valve;

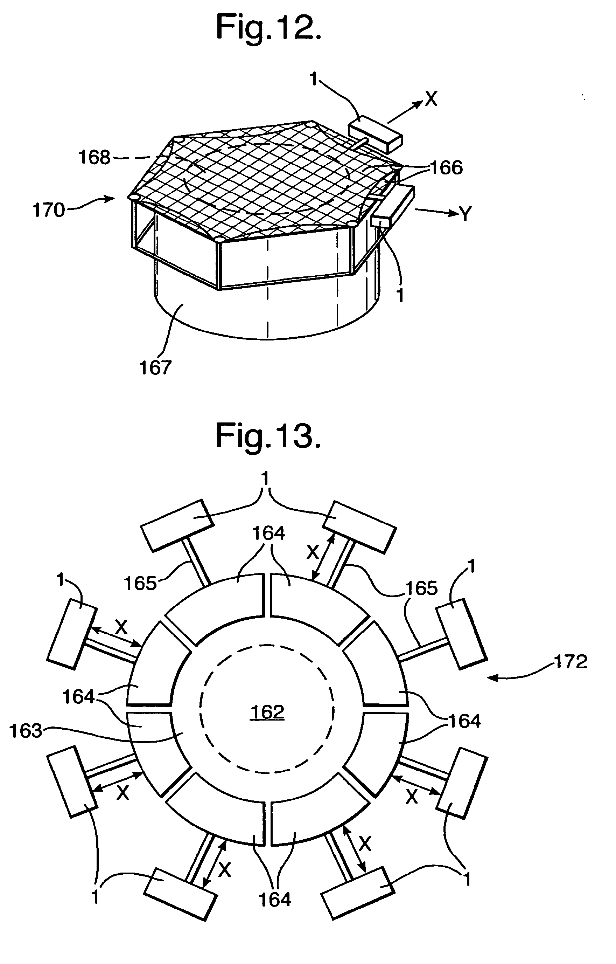

Figure 12 is a schematic perspective view showing transducers according to Figure 1 operating the grids of a gridded ion-engine;

Figure 13 is a schematic plan view showing transducers according to the invention operating as part of a turbine tip clearance system;

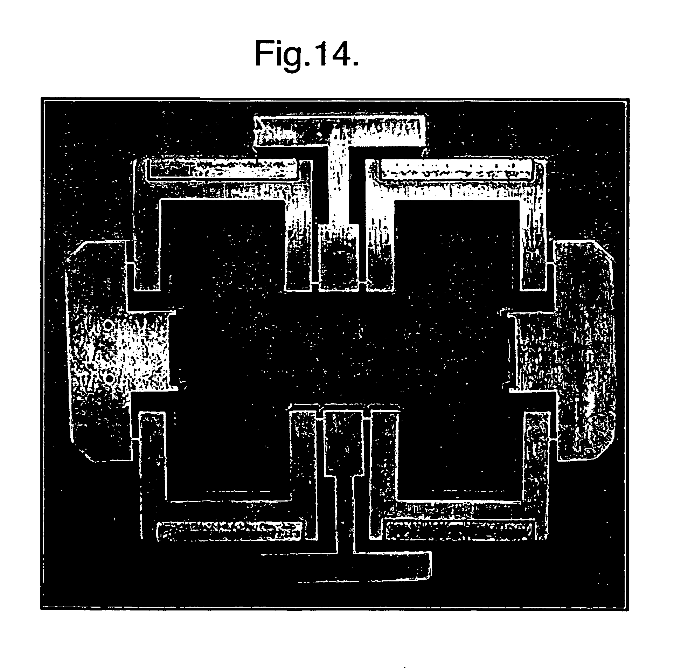

Figure 14 is a photograph of a prototype temperature compensating actuator according to Figure 1 but without the piezoelectric driver member; and

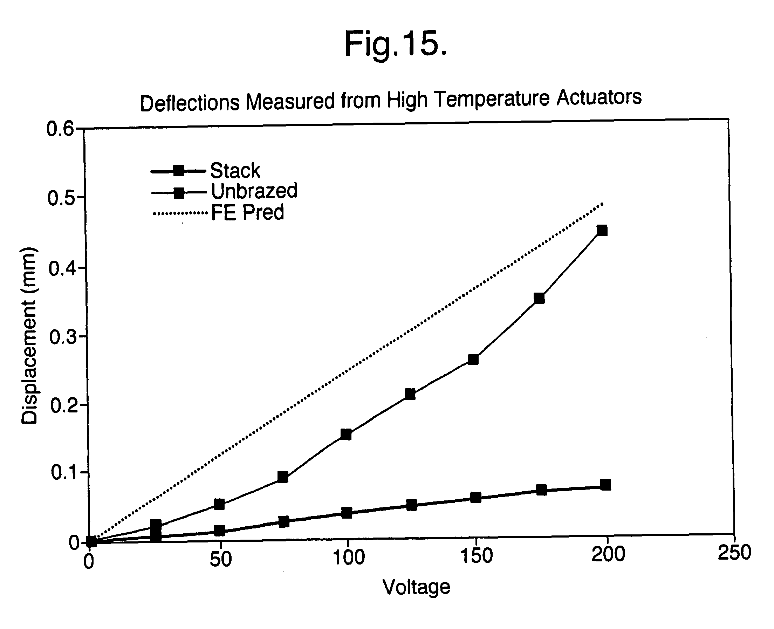

Figure 15 is a graph showing measured displacement against applied voltage for the actuator of Figure 1.

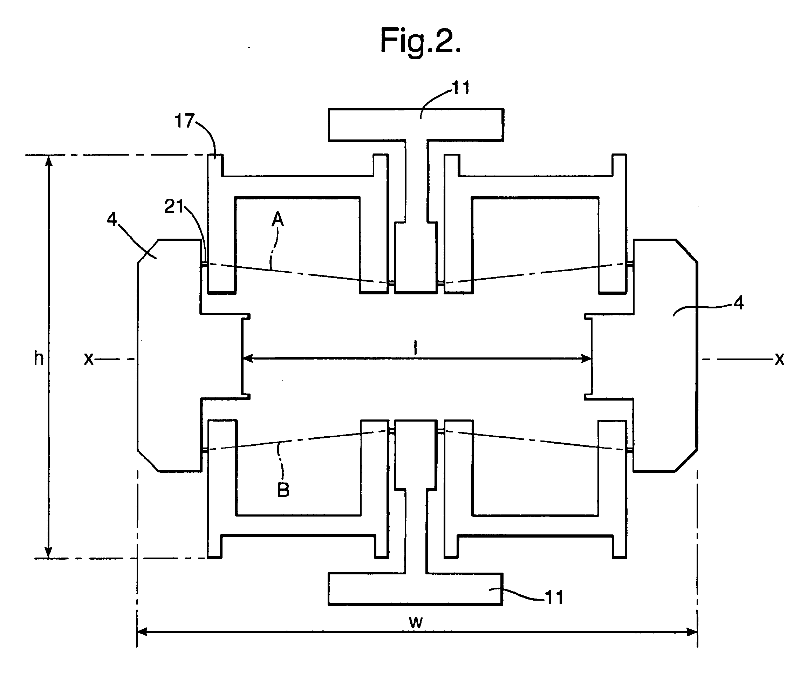

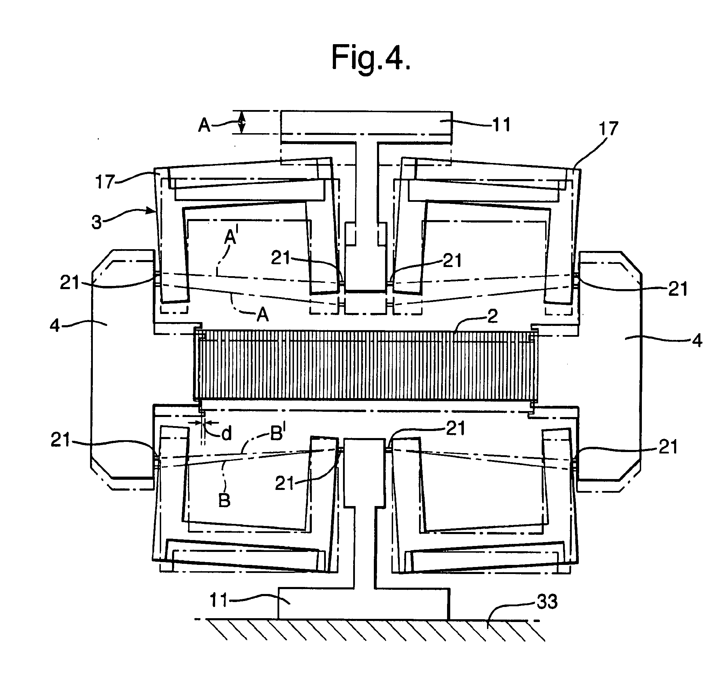

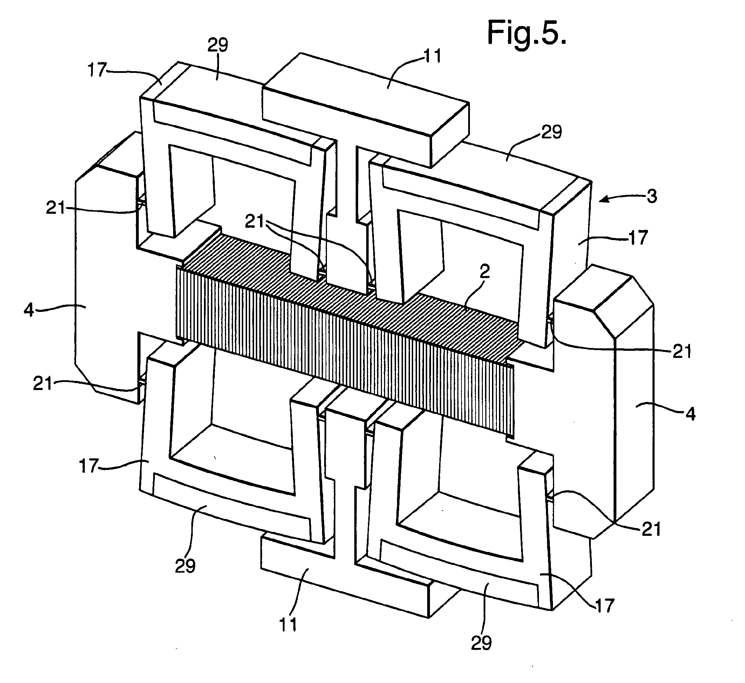

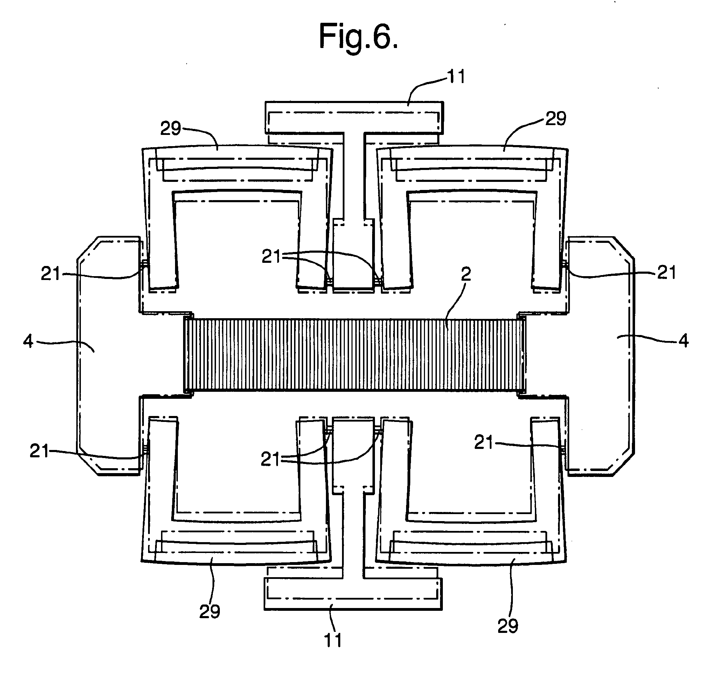

Referring to Figure 1, the actuator 1 is shown prior to actuation. It comprises linear elongate driver in the form of a piezoelectric PZT stack 2, which can be activated by application of a voltage of 200 V in a known manner. Electrical connection wires for activating the stack are not shown. Application of the voltage will cause the stack to increase in length. Surrounding the PZT stack 2, and coplanar therewith, is a flextensional housing shell, indicated generally by the reference numeral 3. The actuator 1 is shown in the drawing with the PZT stack extending substantially horizontally, and reference will be made in this description to sides, upper, lower and the like, assuming this horizontal position of the PZT stack. It will be appreciated that, in operation, the actuator could be oriented in any direction. The flextensional housing shell 3 comprises a pair of contact portions 4 which contact opposite ends of the PZT stack 2. The contact portions 4 are in mechanical contact with the opposite ends of the PZT stack 2. Mid way between the contact portions 4 of the housing shell 3, and on opposite sides of the housing shell 3 and the stack 2, are transmission portions 11 of the housing shell 3. These are "T" shaped members, the heads of the "Ts" providing the uppermost and lowest surfaces of the actuator 1 and the stems of the "Ts" extending inwardly of the housing towards the mid point of the PZT stack 2. Positioned between the transmission portions 11 and the contact portions 4 are "U" shaped shoulder members 17. Each U shaped member 17 is flat bottomed and is arranged so that the base of the U extends substantially parallel to the PZT stack outwardly of the housing, and the tips of each "U" extend from the U base inwardly of the housing 3 towards the PZT stack 2. Each U shaped shoulder member 17 is flexibly connected at its tips to the T shaped transmission portions 11 and to the contact portions 4 of the housing. The flexible connection is achieved through flexure hinges 21 which connect one tip of each u-shaped shoulder portion 17 to a contact portion 4 on the side of the housing 3, and the other tip of each u shaped shoulder portion 17 to the base of the stems of the T shaped transmission portions 11. The relative positions of the flexure hinges 21 is such that lines drawn either side of the PZT stack 2, through the flexure hinges 21 incline towards the mid point of the PZT stack 2. This is important during actuation of the PZT stack 2, and is described in more detail later with reference to Figures 2 and 4. Thermal compensating members in the form of insert strips 29 made from brass are provided in a recess on the outwardly facing surface of the base of each "U" shaped shoulder members 17. The housing shell 3 is made from stainless steel. Brass has a significantly higher coefficient of thermal expansion than stainless steel, and the insert strips 29 are important for maintaining a constant clamping force between the contact portions 4 of housing 3 and the ends of the PZT stack 2 at elevated temperatures. This is described in more detail later with reference to Figures 5 and 6. As alternative materials, there may be mentioned titanium for the housing and copper for the insert plates 29.

The flextensional housing shell of Figure 1 is made by the following method. A solid rectangular stainless steel blank, made from a tool steel, is cut using the known technique of "wire erosion" cutting, which allows precision cutting to the dimensions shown in scale drawing Figure 2. Recesses in the base of each shoulder portion 17 of the housing shell are provided with holes (not shown) for receiving screws to secure the thermal compensating members to the housing shell, as described later.

Figure 2 is a side elevation view of the stainless housing 3 of the actuator 1 of Figure 1 at room temperature. It is a scale drawing, and dimensions h, W, I shown in the drawings are as follows:

h= 70 mm W = 80mm I = 50mm.

The thickness of the stainless actuator (into the paper as drawn, so not referenced in Figure 2) is 10mm.
The skilled man will appreciate these are only typical dimensions which can be scaled up or down depending on the size of the piezoelectric stack that it is desired to use.
Thermal compensating members in the form of brass elongate strips, plates or coupons are then screwed into the recesses in the shoulder portions of the housing shell, through the aforementioned screw holes. The housing and thermal compensating members are then annealed or hardened in a known manner by thermal techniques. This is required since tool steel was used as the material of the embodiment that was made, and this is a relatively soft steel that benefits from the hardening process. If a different, relatively harder, stainless steel (or spring steel) or other similarly harder metal or alloy were used then this annealing/hardening step could be omitted. Then the housing is flexed, by applying finger pressure inwardly to the transmission portions 11, causing contact portions 4 of the housing to move away form each other a sufficient distance to insert the piezoelectric stack 2. The length of the piezoelectric stack is 51 mm, i.e. slightly longer than the unstressed distance "I" of 50 mm between the contact portions 4 of the housing so that the housing exerts an initial preload onto the stack 2. Optionally shims or thin layers may be inserted between the stack and the housing contact portions to increase the preload.
Figure 2 also shows the longitudinal axis X of the actuator, along which, in operation, the PZT stack extends. Two dashed lines A, B, are depicted on either side of the longitudinal axis passing through the flexure hinges 21. It will be seen that the relative positions of the flexure hinges are such that lines A, B extending them incline inwardly towards the mid point of the longitudinal axis X. In operation, when the PZT stack 2 is actuated, it increases its length, causing contact portions 4 to move away from each other. The flextensional housing shell 3 flexes at its hinges 21 to accommodate this movement. The flexing acts to tend to straighten the lines A, B, thereby moving T shaped transmission portions 11 of the housing away from each other. The length and angles between the flexure hinges is such that a mechanical advantage is achieved and a relatively small movement of contact portions 4 away from each other causes an amplified movement of T shaped transmission portions 11 away from each other.

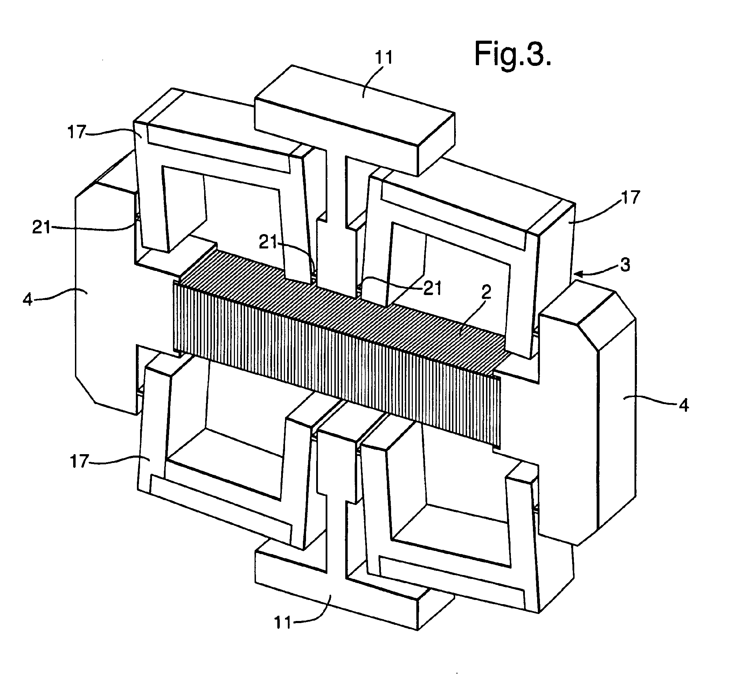

Figures 3 and 4 are perspective and cross-sectional, room temperature views of the actuator of Figure 1 after actuation of the PZT stack. In Figure 4, the position prior to actuation is shown in dotted lines, and the position after actuation is shown in solid lines and shaded. Similarly, in Figure 4, the position of the lines through the flexure hinges 21 on either side of the PZT stack 2 are shown as dotted lines A prior to actuation, and dashed lines A', B' after actuation. It will be seen that the increase in length 2d of the PZT stack (d at each end) has resulted in an amplified displacement D of the head of T shaped transmission portion 11 of the housing. In this figure the actuator is shown on a fixed surface 33 so that the overall displacement D is evident at the top of the actuator. As can be seen from both Figure 3 and 4, the movement of the flextensional housing 3 about the flexure hinges 21 (as best illustrated as straightening of the lines A,B) not only causes upward displacement D of the head of the t shaped transmission portion 11 of the housing shell 3, but also causes tilting of U shaped shoulder portions 17 of the housing 3 away from the mid point of the PZT stack 2. It will be appreciated that during the movement lines A, B tend to a straighter orientation, but will usually not completely straighten. Also, it will be appreciated that although the actuator 1 is depicted in Figure 4 on a fixed base 33, other positions are also envisaged. The resultant relative displacement D between transmission portions 11 of the housing 3 is in a direction orthogonal to the actuating displacement 2d that is provided by the PZT stack 2, and amplified relative thereto, but at a reduced force.

Referring to Figure 15, this graph shows the measured displacement 'D' of the transmission portion 11 when a prototype actuator with the above dimensions was operated at room temperature and subjected to an input voltage across the PZT stack 2. The lower curve shows the actual displacement of the PZT stack 2, while the middle curve shows the resultant displacement 'D'. This is quite a good match for the displacement predicted by modelling - the dotted line curve above - given that this particular prototype was only made from tool steel (as opposed to spring steel, for example).

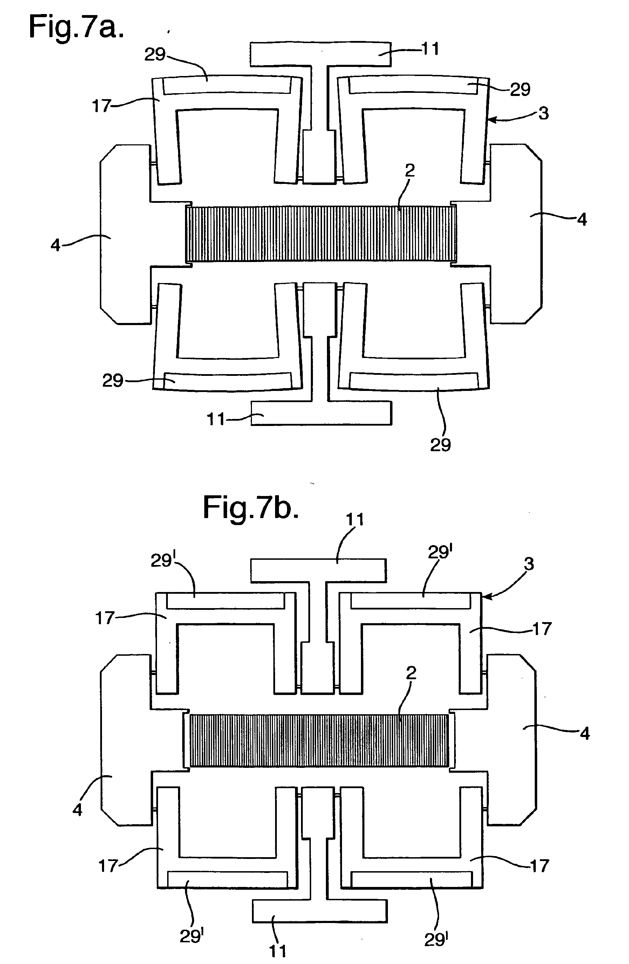

Figure 5 is a perspective view of the actuator of Figure 1 at 400°C. Figure 6 is a cross-sectional view of the actuator of Figure 1 showing both the position of the component parts at room temperature (dotted lines) and the position of the component parts at 400°C (in solid lines and shaded). It will be seen, particularly with reference to Figure 6 that at 400°C the stainless steel housing has expanded, relative to its position at room temperature, and occupies a larger volume (or area in cross section as seen in the Figure) than at room temperature. The brass inserts 29 in each of the U shaped shoulder portions have expanded more than the surrounding stainless steel, because brass has a significantly higher coefficient of expansion than stainless steel. As can be seen in both Figures 5 and 6, this causes the base of each of the shoulder members 17 of the housing 3, which at room temperature is substantially flat to bow outwardly of the housing so that the tips of each u shaped shoulder portion 17 come towards each other. This bowing action acts through the remainder of the housing, particularly through the flexure hinges 21 causing the contact portions 4 to be urged towards each other. This movement compensates for the difference in thermal coefficient of expansion of the PZT stack 2 and the stainless steel of the housing 3. As can be seen in Figure 6, the interface regions between contact portions 4 of the housing 3 and the ends of the PZT stack 2 do not substantially change position between room temperature and 400°C. There is a small movement due to the expansion of the PZT stack 2, but this is very small due to the very low coefficient of thermal expansion of the PZT stack, and is not visible in the Figure. Computer modelling was used to design the exact size of the thermal compensating strips needed so that at any given temperature in the temperature range -70°C to 500°C they compensate for the difference in coefficient of expansion between the housing and the PZT stack so that the interface between the contact portions 4 of the housing and the ends of the PZT stack 2 maintain mechanical contact, the clamping force on the stack is maintained at a constant value, and the initial preload on the PZT stack 2 is maintained constant. If the inserts 29 were not present, the PZT stack would simply fall out of the housing 3 at elevated temperatures, particularly if subject to vibration. This fact can be seen more clearly with reference to Figures 7a and 7b. Figures 7a shows the actuator of Figures 1-6 at 400°C, prior to actuation of the PZT stack 2. The deformation shown in Figures 7a and 7b, as in all the figures, is ten times the true value, for clarity. In a similar manner to the description of Figure 6, it can be seen that there is no relative displacement of the parts at the point of contact between the PZT stack 2 and the housing shell 3. In contrast, comparative Figure 7b shows the same transducer design as that shown in Figures 1-7a but with the brass thermal compensating members 29 of those figures replaced by identically shaped members 29' made from the same stainless steel as the housing, again at 400°C. In this case, as can be seen, the housing shell parts have expanded uniformly outwards leaving a gap between the ends of the PZT stack 2 and the contact surfaces 6,7 of the side portions 4,5 of the housing shell 3. The figures 7a and 7b were generated by modelling. In operation of such a transducer as shown in Figure 7b, the PZT stack 2 would fall out. The brass inserts in the housing shell therefore make it possible to use the actuator at temperatures across the stated temperature range.

The thermal expansion of a prototype flextensional piezoelectric actuator was investigated at a range of temperatures in a furnace. A prototype actuator provided with brazed on copper (bimetallic) strips and having the dimensions referenced above was tested in the absence of the piezoelectric stack, as shown in Fig. 14. Distance "I" between the contact portions 4 of the housing (as identified in Fig. 2), which is 50mm at room temperature (21°C), was measured at 50°C intervals using a capacitance probe (a non-contact displacement probe) positioned between the contact portions, and with suitable delays to allow the FPA to reach equilibrium. At 250°C, the bimetallic design exhibited an expansion of distance "I" of 56μm. This compared favourably with a control test in which a similar FPA without the copper inserts, and hence, without "temperature compensation" exhibited an expansion of 137μm at 250°C. In this prototype, brazing of the bimetallic strip was not an ideal method of joining the two metals together. Fusing the "bimetallic" copper strips together prior to wire cutting the FPA would form a much improved bond and would be expected to reduce the thermal expansion further, as would the use of spring steel (as opposed to the inferior "tool steel" used in this prototype).

Thus, to summarise, in a preferred flextensional piezoelectric actuator (FPA) according to the present invention, a piezoelectric ceramic stack is held under compression in the central region of the metal frame of the FPA. The FPA mechanically amplifies the expansion of the piezoelectric stack when a voltage is applied across the stack. The piezoelectric stack is held under a constant preload so that it is under constant compression across a selected range of operating temperatures. This enables the actuator to function both in contraction and expansion. The preload also restores the actuator frame to its original position. Thermal expansion of the FPA occurs with increasing temperatures (to a much greater degree than that experienced by the ceramic stack). This would cause the preload on the piezoelectric stack to vary with temperature in an uncompensated actuator. The function of the copper ("bimetallic") strips is to maintain a roughly constant preload on the piezoelectric stack by counteracting the thermal expansion of the FPA by altering the overall geometry of the metallic frame of the FPA through the flexure hinges.

The actuator described with reference to Figures 1 to 7a may be used, for example to produce a force and/or displacement to operate a device such as a valve. In a typical application, lower T shaped transmission member 11 is placed on a fixed surface 33 (see Figure 4) and a direct current input voltage is applied across the ends of the PZT stack, in a manner well known in the art. This causes a small increase in length of the PZT stack 2 in the horizontal direction in the orientation drawn in Figure 4. This causes a consequent displacement D of the upper T shaped transmission member 11 in an orthogonal direction (vertically upwards as shown in the Figure), or if movement in the upward direction is restricted by a device, it generates an output force on that device. In this "actuator mode" the so-called "transmission portions" 11 are transmitting a displacement or force to a device, one transmission portion 11 acting as a stop or abutment against a fixed surface 33, so that the other transmission portion 11 can transmit a displacement or force to the device. It will be appreciated that the actuator can operate either way up, and in any orientation. This type of actuator device finds particular application, for example a fuel injection valve in a jet or diesel engine, in a control system in an aerospace system, or in other similar extreme temperature environments, typically up to about 570°C.

It is also envisaged that a transducer identical in design to that shown in Figures 1-7a could be used not as an actuator, but as a sensor to detect and/or measure forces and displacements exerted on them. Figure 8 shows a transducer operating in a sensor in this way and in this Figure like reference numerals are used for like parts relative to the embodiment of Figures 1-7a. In operation lower transmission portion 11 is attached to fixed base 33 and an input force F or displacement F moves the upper transmission portion 11 downwards. This movement transmitted through the housing 3 by flexure of the flextensional housing causes the contact portions 4 of the housing 3 to move towards each other, shortening the PZT stack 2. This produces an electrical charge in the PZT stack, which can be measured as a voltage by detector 34, attached across the ends of the PZT stack 2 as shown. The voltage detector 34 therefore acts as a force or displacement gauge. As depicted in Figure 8 the input force or displacement F is shown operating in a downward direction. The sensor would also operate if the input force of displacement were in the opposite direction, the force/ displacement causing lengthening of the PZT stack 2 and a similar electrical current in the PZT stack 2 which could be detected by the force/displacement gauge 34. In this sensor application, a relatively large movement of the transmission portions 11 of the housing shell 3 causes a relatively smaller movement (shortening) of the PZT stack, but at an amplified force. This is a preferred design for a sensor mode of operation, since a PZT stack requires a relatively large force to generate a voltage across it.

The embodiments described above with reference to Figures 1-7a and 8 all have generally straight sides. Such designs are particularly advantageous since they are easy to modify for different force/displacement applications by repositioning of the flexure hinges 21 lower or higher on their point of contact with the contact portions 4 of the housing 3 and/or on the arms of the U-shaped shoulder members 17 of the housing 3. For example, in the embodiments shown in the drawings, with particular reference to Figure 2, the flexure hinges 21 are arranged so that lines A, B drawn through them inclines concavely towards the axis X of the actuator. This means that a lengthening (outward movement)of the PZT stack 2 in operation causes a corresponding relative outward movement of the transmission means 11. This is sometimes known as a "push" actuator. If however the position of the flexure hinges 21 were changed so that the lines A, B bent concavely away from the axis X of the actuator, then a lengthening of the PZT stack would cause lines A, B to straighten, as before, but in this case this would cause a relative inward displacement of the transmission members 11. This would therefore provide a so-called "pull" actuator. Thus the straight sided design of the housing shell provides for minimum modification of a basic design for different applications. Another advantage of the substantially straight sided design is that it provides a flat recess for seating the brass portions 29, which facilitates manufacture.

Other designs are also envisaged. Figures 9 and 10 are perspective and cross-sectional views respectively of a generally oval shaped pulling actuator being used to exert a force onto, and cause an inward displacement of a device 135. In Figures 9 and 10, parts which have similar function to those parts in the embodiments of Figures 1-8 are shown with a reference numeral that is 100 more than that used for the part in the embodiment of Figures 1-8. In this embodiment the housing 103 comprises generally curved shoulder portions 117 connected to side portions 104 and transmission members 111 of the housing 103. Connection is by flexure hinges 121. As can be seen in Figure 10, lines C, D drawn through the flexure hinges 121 form a convex shape. In this embodiment when a voltage is applied across the ends of the PZT stack 102 from a voltage source (not shown) it causes the PZT stack to lengthen, and the housing 103 moves to straighten lines C,D causing the transmission members 111 to be drawn towards each other. Transmission member 111 is secured to a fixed plate 133, which means that a force is applied onto device 135, which is secured to the upper transmission member 111, displacing it downwards. The position of the flexure hinges 121 generates an amplified inward displacement of the load 135. In this embodiment the housing 103 is made from stainless steel, and curved inserts 129 made of brass are inset into each curved shoulder portions 117. These act in the same manner as the inserts 29 of the earlier embodiments to retain mechanical contact at the pzt stack/housing interface up to and at elevated temperatures up to about 570°C. Additionally, in this embodiment an additional thermal compensating member 137 is provided forming the top part of the upper transmission member 111. This comprises brass having a higher coefficient of expansion than the stainless steel making up the bulk of the housing body. The reason for this is that at elevated temperatures the bimetal bending motion of the shoulders and insert strips 117 and 129 not only urges the contact portions 104 towards each other but also urges transmission members 111 towards each other. Thus the inclusion of brass member 137 compensates for this movement of transmission members 111 so that premature displacement of the device 135 is substantially prevented.

Figure 11 shows the actuator of Figure 1 in use to open a hydraulic fuel valve, which is an application where operating temperatures at which actuation takes place often exceed 300°C or even 500°C. In this figure a sealed cylindrical chamber 150 allows access to the hydraulic fluid (gas or liquid) through inlet pipe 152 as indicated by arrow I. The fluid can exit the chamber 150 through outlet pipe 154 as indicated by arrow O. Valve seat 156 is located at the opening of the pipe 154 into the chamber. The actuator 1 from Figure 1 is positioned in the base of chamber 150, and a needle 158 extends vertically upward from the upper transmission member 13 of the actuator, the needle 158 being slidable through an opening ring 160 in a dividing wall extending across the body of the chamber above the actuator 1. On actuation by application of a voltage to the piezoelectric driver 2 of the actuator 1, the upper T shaped transmission member 11 moves vertically upwards causing the needle 158 to press against valve seat 156 thereby sealing the fluid exit pipe 154. When the voltage is removed from the driver 2, the piezoelectric driver 2 reverts to its original pre-actuated length, so the transmission plate 13 and attached needle 158 withdraw from the valve seat 156, opening the outlet pipe 154 again.

Figure 12 is a schematic view showing a gridded ion engine 170 comprising two actuators 1 of the type described with reference to Figure 1 in use to operate overlapping grids 166 in the gridded ion engine. This type of engine is typically used in a space craft. The gridded ion engine provides propulsion of a space ship by accelerating a beam of charged ions away from the ion chamber 167 and away from the spacecraft to provide propulsion to the space craft. The gridded ion engine is provided with double grid layers 166 at its outlet 168 that are movable relative to each other in the x/y planes in order to control the direction of expulsion of the charged ions from the ion engine, and hence the direction of thrust. The ion engine is able to use this ability to change the direction of thrust in order to steer the space ship. Precision movement of the grids is essential, and the temperature conditions experienced typically cover the complete range from 0°C, or lower before the thrusters are switched on, to about 500°C. According to this embodiment of the invention two actuators 1 according to Figure 1 are attached and powered by a voltage to move respective ones of overlapping grids 166 in the x and y planes respectively. The direction of grid movement in the X and Y direction is indicated by arrows X, Y in the figures. The voltage can be removed from the actuators 1 to return the actuators to their pre-actuated position.

Figure 13 is a schematic plan view of a turbine tip clearance system 172 comprising a turbine chamber 162 that is surrounded by a plurality of casing segments 164 that make up the chamber wall. Turbine blades (not shown) are rotating within the chamber 162. The casing segments 164 can be moved radially by actuators 1 (of the type described with reference to Figure 1) by small distances to decrease or increase the chamber diameter so as to change the air gap 163 between the tips of the turbine blades and the chamber wall 164. An actuator 1 is provided for each casing segment 164 acting to move its respective segment 164 radially in or out as indicated by arrows X. Each actuator 1 acts via a connector 165 joining the transmission portions of each actuator of Figure 1 to it respective chamber segment 164.

## Claims

1. A flextensional transducer (1) that can be stored at room temperature and activated and operated at an elevated temperature in excess of 200°C, the transducer comprising (i)an elongate driver (2) (ii)a flextensional housing shell (3) containing the elongate driver, comprising a pair of contact portions (4) located on opposite sides of the housing shell and in mechanical contact with the ends of the driver, and having a different coefficient of thermal expansion from that of the driver, and (iii)thermal compensating members (29); the flextensional housing shell moving by flexing on actuation, the thermal compensating members being located in, or on, parts of the housing shell that move on actuation, and comprising a material having a different coefficient of thermal expansion from that of surrounding parts of the housing shell, such that as the temperature increases up to the said elevated temperature the thermal compensating members expand more or less than the said surrounding parts of the housing shell, causing the housing shell to flex so as to urge the contact portions of the housing shell towards each other to compensate for the greater thermal expansion of the housing relative to that of the driver member.

2. A transducer according to claim 1, wherein the housing comprises a pair of transmission portions (11) located on opposite sides of the housing shell on either side of the driver axis, and on actuation of the transducer the housing moves by an input displacement of, or force on, the contact portions being translated by flexing of the housing to cause an output displacement of, or force on, the transmission portions (11) of the housing shell, or vice versa.

3. A transducer according to claim 2, wherein the housing shell comprises shoulder portions (17) located between the said contact and transmission portions, and the thermal compensating members are located on or in the said shoulder portions.

4. A transducer according to claim 3, wherein the shoulder portions are flexibly connected to, the said contact portions and transmission portions.

5. A transducer according to any preceding claim, wherein the thermal compensating members are positioned on, or at least partly embedded in, an outwardly facing surface of the housing shell.

6. A transducer according to any preceding claim, wherein the thermal compensating members have a higher coefficient of thermal expansion than the said surrounding parts of the housing shell so that as the temperature increases up to the said elevated temperature the thermal compensating members expand more than the said surrounding parts of the housing shell.

7. A transducer according to any preceding claim, wherein the thermal compensating members are in the form of a strip, which has a higher coefficient of thermal expansion than the said surrounding parts of the housing shell so that as the temperature increases up to the said elevated temperature the thermal compensating strip expands more than the said surrounding parts of the housing shell causing the strip to bow so that its ends move inwardly of the housing shell and towards each other.

8. A transducer according to claim 3, or any claim dependent thereon, wherein the shoulder portions are substantially "u" shaped, the tips of the u-shaped shoulder portions extending inwardly of the transducer.

9. A transducer according to claim 8, wherein the thermal compensating members are located on the outwardly facing surface or at least partially embedded in the outwardly facing surface of the base of each "u" shaped shoulder portion.

10. A transducer according to claim 9, wherein the thermal compensating members are in the form of strips and have a higher coefficient of thermal expansion than the said surrounding parts of the housing shell so that as the temperature increases up to the said elevated temperature the thermal compensating strips expand more than the said surrounding parts of the housing shell causing the strips to bow, which in turn causes the base of the "u" shaped shoulder portions to bow and consequently causes the tips of the arms of each "u" shaped shoulder portion to move both inwardly of the housing and towards each other.

11. A transducer according to claim 8, 9, or 10, wherein the contact portions of the housing project in a direction away from driver axis to overlap the tips of the u-shaped intermediate portions, for flexible connection thereto.

12. A transducer according to claim 3, or any of claims 4 to 7 dependent thereon,
wherein the said shoulder portions are curved between the contact portions and the transmission portions.

13. A transducer according to any preceding claim which is an actuator, wherein the elongate driver member can be actuated by a signal so as to change its length, and the flextensional housing shell comprises transmission portions located between the said contact portions on opposite sides of the housing shell, the arrangement being such that the said change in length of the driver member causes the said transmission members of the housing to move relative to each other, or to exert a force, in a direction orthogonal to the length of the elongate driver member.

14. A transducer according to any of claims 1 to 12 which is a sensor, wherein the flextensional housing shell comprises transmission portions located between the said contact portions on opposite sides of the housing shell the arrangement being such that relative movement of the transmission members in a direction orthogonal to the length of the driver causes a change in length of the driver and consequent generation of a signal,

15. A method of using a transducer according to any preceding claim, at a temperature in excess of 200°C, either, as an actuator to displace a device or to apply a force to a device, or, as a sensor, the elongate driver member of the sensor generating a signal in response to a displacement of the flextensional housing of the transducer.

**Patentansprüche**

1. Auf Dehnung und Biegung beruhender Wandler (1), der bei Raumtemperatur aufbewahrt und bei einer erhöhten Temperatur von mehr als 200 °C aktiviert und betrieben werden kann, wobei der Wandler aufweist:

    (i) einen länglichen Antrieb (2), (ii) eine auf Dehnung und Biegung beruhende umgebende Gehäuseanordnung (3), die den länglichen Antrieb enthält, zwei Kontaktteile (4) aufweist, die auf einander gegenüberliegenden Seiten der umgebenden Gehäuseanordnung und in mechanischem Kontakt mit den Enden des Antriebs angeordnet sind, und einen thermischen Ausdehnungskoeffizienten besitzt, der von dem des Antriebs verschieden ist, und (iii) Elemente (29) zur thermischen Kompensation, wobei sich die auf Dehnung und Biegung beruhende umgebenden Gehäuseanordnung bei Antrieb durch Verbiegen bewegt, die Elemente zur thermischen Kompensation in oder auf Teilen der umgebenden Gehäuseanordnung angeordnet sind, die sich bei Antrieb bewegen, und aus einem Material bestehen, dessen thermischer Ausdehnungskoeffizient vorn thermischen Ausdehnungskoeffizienten sie umgebender Teile der umgebenden Gehäuseanordnung verschieden ist, so dass sich die Elemente zur thermischen Kompensation bei Erhöhung der Temperatur bis zu der genannten erhöhten Temperatur mehr ausdehnen oder weniger ausdehnen als die umgebenden Teile der umgebenden Gehäuseanordnung, was bewirkt, dass sich die umgebende Gehäuseanordnung so verbiegt, dass die Kontaktteile der umgebenden Gehäuseanordnung auf einander zu gedrückt werden, um so die in Bezug auf die thermische Ausdehnung des Antriebselements größere thermische Ausdehnung der Gehäuseanordnung zu kompensieren.

2. Wandler nach Anspruch 1, bei dem die Gehäuseanordnung zwei Übertragungsteile (11) aufweist, die auf einander gegenüber liegenden Seiten der umgebenden. Gehäuseanordnung auf jeder Seite der Achse des Antriebs angeordnet sind, und sich die Gehäuseanordnung bei Antrieb des Wandlers durch eine Eingangs-Verschiebung der Kontaktteile oder eine darauf ausgeübte Kraft bewegt, die durch Verbiegen der Gehäuseanordnung übertragen wird, wodurch eine Ausgangs-Verschiebung der Übertragungsteile (11) der umgebenden Gehäuseanordnung oder eine darauf ausgeübte Kraft hervorgerufen wird, oder umgekehrt.

3. Wandler nach Anspruch 2, bei dem die umgebenden Gehäuseanordnung Schulterteile (17) aufweist, die zwischen den Kontaktteilen und den Übertragungsteilen angeordnet sind, und die Elemente zur thermischen Kompensation auf oder in den Schulterteilen vorgesehen sind.

4. Wandler nach Anspruch 3, bei dem die Schulterteile mit den Kontaktteilen und den Übertragungsteilen flexibel verbunden sind.

5. Wandler nach einem der vorhergehenden Ansprüche, bei dem die Elemente zur thermischen Kompensation auf einer nach außen gerichteten Fläche der umgebenden Gehäuseanordnung angeordnet oder zumindest teilweise darin eingebettet sind.

6. Wandler nach einem der vorhergehenden Ansprüche, bei dem die Elemente zur thermischen Kompensation einen höheren thermischen Ausdehnungskoeffizienten aufweisen als die umgebenden Teile der umgebenden Gehäuseanordnung, so dass sich die Elemente zur thermischen Kompensation bei Erhöhung der Temperatur bis zu der genannten erhöhten Temperatur stärker ausdehnen als die umgebenden Teile der umgebenden Gehäuseanordnung.

7. Wandler nach einem der vorhergehenden Ansprüche, bei dem die Elemente zur thermischen Kompensation in Form eines Streifens vorliegen, der einen höheren thermischen Ausdehnungskoeffizienten aufweist als die umgebenden Teile der umgebenden Gehäuseanordnung, so dass sich der Streifen zur thermischen Kompensation bei Erhöhung der Temperatur bis zu der genannten erhöhten Temperatur stärker ausdehnt als die umgebenden Teile der umgebenden Gehäuseanordnung, was dazu führt, dass sich der Streifen so verbiegt, dass sich seine Enden zum Inneren der umgebenden Gehäuseanordnung hin sowie aufeinander zu bewegen.

8. Wandler nach Anspruch 3 oder einem davon abhängigen Anspruch, bei dem die Schulterteile im Wesentlichen U-förmig ausgebildet sind, wobei sich die Spitzen der U-förmigen Schulterteile zum Inneren des Wandlers hin erstrecken.

9. Wandler nach Anspruch 8, bei dem die Elemente zur thermischen Kompensation auf der nach außen gerichteten Fläche der Basis jedes U-förmigen Schulterteils angeordnet oder zumindest teilweise in der nach außen gerichteten Fläche davon eingebettet sind.

10. Wandler nach Anspruch 9, bei dem die Elemente zur thermischen Kompensation in Form von Streifen ausgebildet sind und einen höheren thermischen Ausdehnungskoeffizienten aufweisen als die umgebenden Teile der umgebenden Gehäuseanordnung, so dass sich die Streifen zur thermischen Kompensation bei Erhöhung der Temperatur bis zu der genannten erhöhten Temperatur stärker ausdehnen als die umgebenden Teile der umgebenden Gehäuseanordnung, was verursacht, dass sich die Streifen verbiegen, was wiederum dazu führt, dass sich die Basis der U-förmigen Schulterteile verbiegt und sich demzufolge die Spitzen der Arme jedes U-förmigen Schulterteils zum Inneren der Gehäuseanordnung hin sowie aufeinander zu bewegen.

11. Wandler nach Anspruch 8, 9 oder 10, bei dem die Kontaktteile der Gehäuseanordnung in einer von der Achse des Antriebs weg weisenden Richtung hinausragen und teilweise über den Spitzen der U-förmigen Zwischenteile liegen, um eine flexible Verbindung damit zu erzielen.

12. Wandler nach Anspruch 3 oder einem der Ansprüche 4 bis 7 in Abhängigkeit von Anspruch 3, bei dem die Schulterteile zwischen den Kontaktteilen und den Übertragungsteilen gebogen sind.

13. Wandler nach einem der vorhergehenden Ansprüche, bei dem es sich um einen Aktuator handelt, bei dem das längliche Antriebselement durch ein Signal so angesteuert werden kann, dass es seine Länge ändert, und die auf Dehnung und Biegung beruhende umgebende Gehäuseanordnung Übertragungsteile aufweist, die zwischen den Kontaktteilen auf einander gegenüber liegenden Seiten der umgebenden Gehäuseanordnung vorgesehen sind, wobei die Anordnung so ist, dass die Änderung in der Länge des Antriebselements dazu führt, dass sich die Übertragungsteile der Gehäuseanordnung relativ zueinander in einer zur Länge des länglichen Antriebselements orthogonalen Richtung bewegen oder in dieser Richtung eine Kraft ausüben.

14. Wandler nach einem der Ansprüche 1 bis 12, bei dem es sich um einen Sensor handelt, bei dem die auf Dehnung und Biegung beruhende umgebenden Gehäuseanordnung Übertragungsteile aufweist, die zwischen den Kontaktteilen auf einander gegenüber liegenden Seiten der umgebenden Gehäuseanordnung vorgesehen sind, wobei die Anordnung so ist, dass die relative Bewegung der Übertragungsteile in einer zur Länge des Antriebs orthogonalen Richtung eine Änderung in der Länge des Antriebs hervorruft und demzufolge zur Erzeugung eines Signals führt.

15. Verfahren der Verwendung eines Wandlers nach einem der vorhergehenden Ansprüche bei einer Temperatur von über 200 °C entweder als Aktuator zur Verschiebung einer Vorrichtung oder zum Ausüben einer Kraft auf eine Vorrichtung oder als Sensor, wobei das längliche Abtriebselement des Sensors unter Ansprechen auf eine Verschiebung der auf Dehnung und Biegung beruhenden umgebenden Gehäuseanordnung des Wandlers ein Signal erzeugt.

**Revendications**

1. Transducteur de flexion-tension (1) qui peut être stocké à température ambiante et activé et mis en fonctionnement à une température élevée supérieure à 200°C, le transducteur comprenant (i) un excitateur oblong (2), (ii) une enveloppe de logement à flexion-tension (3) contenant l'excitateur oblong, comprenant une paire de parties de contact (4) positionnées sur des côtés opposés de l'enveloppe de logement et en contact mécanique avec les extrémités de l'excitateur, et possédant un coefficient de dilatation thermique différend de celui de l'excitateur, et (iii) des éléments de compensation thermique (23) ; l'enveloppe de logement à flexion-tension se déplaçant en fléchissant lors de l'actionnement, les éléments de compensation thermique étant positionnés dans, ou sur, des parties de l'enveloppe de logement qui se déplacent lors de l'actionnement, et comprenant un matériau possédant un coefficient de dilatation thermique différend de celui de parties environnantes de l'enveloppe de logement, de sorte que, lorsque la température augmente jusqu'à ladite température élevée, les éléments de compensation thermique se dilatent plus ou moins que lesdites parties environnantes de l'enveloppe de logement, entraînant la flexion de l'enveloppe de logement afin de pousser les parties de contact de l'enveloppe de logement l'une vers l'autre pour compenser la dilatation thermique du logement supérieure à celle de l'élément excitateur.

2. Transducteur selon la revendication 1, dans lequel le logement comprend une paire de parties de transmission (11) positionnées sur des côtés opposés de l'enveloppe de logement de chaque côté de l'axe de l'excitateur, et, lors de l'actionnement du transducteur, le logement se déplace selon un déplacement d'entrée des parties de contact, ou une force d'entrée sur celles-ci, translatées par le fléchissement du logement pour entraîner un déplacement de sortie des parties de transmission (11) de l'enveloppe de logement, ou une force de sortie sur celles-ci, ou vice versa.

**3.** Transducteur selon la revendication 2, dans lequel l'enveloppe de logement comprend des parties d'épaulement (17) positionnées entre lesdites parties de contact et de transmission, et les éléments de compensation thermique sont positionnés sur ou dans lesdites parties d'épaulement.

**4.** Transducteur selon la revendication 3, dans lequel les parties d'épaulement sont reliées de façon flexible auxdites parties de contact et parties de transmission.

**5.** Transducteur selon une quelconque revendication précédente, dans lequel les éléments de compensation thermique sont positionnés sur, ou au moins partiellement encastrés dans, une surface orientée vers l'extérieur de l'enveloppe de logement.

**6.** Transducteur selon une quelconque revendication précédente, dans lequel les éléments de compensation thermique possèdent un coefficient de dilatation thermique supérieur à celui desdites parties environnantes de l'enveloppe de logement pour que, lorsque la température augmente jusqu'à ladite température élevée, les éléments de compensation thermique se dilatent plus que lesdites parties environnantes de l'enveloppe de logement.

**7.** Transducteur selon une quelconque revendication précédente, dans lequel les éléments de compensation thermique sont sous forme de bande, qui possède un coefficient de dilatation thermique supérieur à celui desdites parties environnantes de l'enveloppe de logement pour que, lorsque la température augmente jusqu'à ladite température élevée, la bande de compensation thermique se dilate plus que lesdites parties environnantes de l'enveloppe de logement, entraînant le fléchissement de la bande pour que ses extrémités se déplacent vers l'intérieur de l'enveloppe de logement et l'une vers l'autre.

**8.** Transducteur selon la revendication 3, ou une quelconque revendication dépendant de celle-ci, dans lequel les parties d'épaulement présentent sensiblement une forme de « u », les embouts des parties d'épaulement en forme de u s'étendant vers l'intérieur du transducteur.

**9.** Transducteur selon la revendication 8, dans lequel les éléments de compensation thermique sont positionnés sur la surface orientée vers l'extérieur ou au moins partiellement encastrés dans la surface orientée vers l'extérieur de la base de chaque partie d'épaulement en forme de « u ».

**10.** Transducteur selon la revendication 9, dans lequel les éléments de compensation thermique sont sous forme de bandes et possèdent un coefficient de dilatation thermique supérieur à celui desdites parties environnantes de l'enveloppe de logement pour que, lorsque la température augmente jusqu'à ladite température élevée, les bandes de compensation thermique se dilatent plus que lesdites parties environnantes de l'enveloppe de logement, entraînant le fléchissement des bandes, qui à son tour entraîne le fléchissement de la base des parties d'épaulement en forme de « u » et par conséquent entraîne le déplacement des embouts des bras de chaque partie d'épaulement en forme de « u » à la fois vers l'intérieur du logement et l'un vers l'autre.

**11.** Transducteur selon la revendication 8, 9, ou 10, dans lequel les parties de contact du logement font saillie dans une direction s'éloignant de l'axe de l'excitateur pour chevaucher les embouts des parties intermédiaires en forme de u, pour une liaison flexible à celles-ci.

**12.** Transducteur selon la revendication 3, ou une quelconque des revendications 4 à 7 dépendant de celle-ci, dans lequel lesdites parties d'épaulement sont incurvée entre les parties de contact et les parties de transmission.

**13.** Transducteur selon une quelconque revendication précédente qui est un actionneur, dans lequel l'élément excitateur oblong peut être actionné par un signal afin de changer sa longueur, et l'enveloppe de logement à flexion-tension comprend des parties de transmission positionnées entre lesdites parties de contact sur des côtés opposés de l'enveloppe de logement, l'agencement étant tel que ledit changement de longueur de l'élément excitateur fait en sorte que lesdits éléments de transmission du logement se déplacent l'un par rapport à l'autre, ou exercent une force, dans une direction orthogonale à la longueur de l'élément excitateur oblong.

**14.** Transducteur selon une quelconque des revendications 1 à 12 qui est un capteur, dans lequel l'enveloppe de logement à flexion-tension comprend des parties de transmission positionnées entre lesdites parties de contact sur des côtés opposés de l'enveloppe de logement, l'agencement étant tel que le mouvement relatif des éléments de transmission dans une direction orthogonale à la longueur de l'excitateur entraîne un changement de longueur de l'excitateur et la génération conséquente d'un signal.

**15.** Procédé d'utilisation d'un transducteur selon une quelconque revendication précédente, à une température supérieure à 200°C, en tant qu'actionneur pour déplacer un dispositif ou pour appliquer une force sur un dispositif, ou en tant que capteur, l'élément excitateur oblong du capteur générant un signal en réponse à un déplacement du boîtier de flexion-tension du transducteur.

Fig.1.

Fig.2.

Fig.3.

EP 2 212 933 B1

# Fig.4.

EP 2 212 933 B1

# Fig.5.

# Fig.6.

EP 2 212 933 B1

# Fig.7a.

# Fig.7b.

Fig.8.

Fig.9.

Fig.10.

# Fig.11.

# Fig.12.

# Fig.13.

Fig.14.

# Fig.15.

Deflections Measured from High Temperature Actuators

EP 2 212 933 B1

**EP 2 212 933 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4845688 A
- US 4808874 A
- US 7132781 B